# EUROPÄISCHE PATENTSCHRIFT

(11) **EP 1 180 603 B1**
(45) Veröffentlichungstag und Bekanntmachung des Hinweises auf die Patenterteilung: **14.09.2005**
(21) Anmeldenummer: 01118648.3
(22) Anmeldetag: 03.08.2001
(51) Int. Cl.: F15B 15/26, B25B 5/08, B25B 5/06

(54) **Stützelement**
Support member
Elément support

(30) Priorität: 09.08.2000 DE 10038760
(43) Veröffentlichungstag der Anmeldung: 20.02.2002
(73) Patentinhaber: Ludwig Ehrhardt GmbH, 35321 Laubach (DE)
(72) Erfinder: Fischer, David, 63743 Aschaffenburg (DE)
(74) Vertreter: von Ahsen, Erwin-Detlef

(56) Entgegenhaltungen:
- EP-A- 0 213 400
- EP-A- 0 620 084
- GB-A- 2 185 532
- PATENT ABSTRACTS OF JAPAN vol. 013, no. 418 (M-871), 18. September 1989 (1989-09-18) & JP 01 154833 A (AIOI SEIKI KK), 16. Juni 1989 (1989-06-16)

## Beschreibung

Die Erfindung betrifft ein Stützelement zur Unterstützung des Spannvorganges von Werkstücken auf Bearbeitungsmaschinen mit einem herausfahrbaren Stützbolzen und Festsetzung desselben mittels eines verschiebbaren Klemmkolbens, der mit einer Keilfläche versehen ist, wobei der Klemmkolben drei unterschiedliche Durchmesser aufweist, die in Kolbenlängsrichtung abgestuft sind, und daß der größte Durchmesser mit seiner Kolbenfläche der Seite zugeordnet ist, die zum Entspannen mit Druck beaufschlagt wird, und daß der Durchmesser zum Spannen des Klemmkolbens eine kleinere Kolbenfläche aufweist, so daß bei gleichem Druck eine größere Kraft zum Lösen des Klemmkolbens auf diesen einwirkt, und daß der Klemmkolben in einem abgestuften Zylinder des Gehäuses geführt ist.

Ein solches Stützelement ist aus der EP 0 620 084 A1 bekannt. Stützelemente dienen zur Unterstützung eines zu bearbeitenden Werkstückes, so daß dieses durch die während der Bearbeitung einwirkenden Kräfte in seiner positionierten Lage gehalten wird. Diese Stützelemente werden somit an das Werkstück herangeführt und in dieser Position festgesetzt. Dieses Festsetzen erfordert eine Krafteinleitung in das Stützelement, durch die der Stützbolzen während des gesamten Arbeitsvorganges unverrückbar in seiner Lage gehalten wird. Diese Kräfte können hydraulisch, pneumatisch oder mechanisch aufgebracht werden. Eine allein auf hydraulischer Basis aufgebrachte Unterstützung erfordert ein ständiges Anstehen des Hydraulikdrucks und ist mit einem großen konstruktiven Aufwand verbunden. Bei dem Stützelement nach der EP 0 620 084 A1 ist deshalb ein Stellkolben vorgesehen, welcher über eine Keilschräge den Stützbolzen betätigt. Der Winkel der Keilschräge ist dabei so bemessen, daß sich eine Selbsthemmung ergibt, so daß sich der Stellkolben auch bei abfallendem Hydraulikdruck nicht löst.

Aus der GB 2 185 532 A ist ein Spannelement bekannt, bei dem ein Spannkolben mit einer Keilfläche versehen ist. Der Spannkolben wird in seiner Spannstellung von einem Querkolben, der ebenfalls eine Keilfläche besitzt, in seiner Lage gehalten, so daß bei einem Druckabfall der Spannzustand erhalten bleiben soll. Die beiden Keilflächen gleiten jedoch mit geringer Flächenpressung so aneinander, daß Rückkräfte leicht zu Verschiebungen führen und damit die Spannwirkung beeinträchtigen. Das Festsetzen in der Spannposition erfolgt nur mittels einer schiefen Ebene, die zwischen dem Kolben und dem Stützbolzen unter einem relativ großen Winkel gebildet ist, der das Lösen des Elements unterstützen soll. Damit ist die Haltung des Werkstücks nicht immer gewährleistet. Der Klemmkolben, der mit seinem glatten Zylindermantel an der ebenfalls glatten Zylinderwandung anliegt, weist nur punktförmigen Berührungskontakt auf.

Hiervon ausgehend liegt der Erfindung das Problem zugrunde, ein Stützelement so zu gestalten, daß es selbsthemmend festsetzbar ist und den einwirkenden Kräften widersteht, und daß es in der eingenommenen Spannposition selbsthemmend ohne weitere Krafteinleitung verbleibt, und ferner, daß es leicht in seine Ausgangsstellung rückführbar ist.

Zur Lösung dieses Problems ist das erfindungsgemäße Stützelement dadurch gekennzeichnet, daß der Klemmkolben auf seiner der Keilschräge gegenüberliegenden Seite mit einer Abflachung versehen ist, derart, daß bei auftretenden Querkräften eine doppelte Flächenunterstützung über den Bereich der Zylinderwand erfolgt.

Die Abflachung sorgt für einen erhöhten Anpressdruck des Klemmkolbens an den Anpressflächen der Innenwandung des Zylinders und damit für ein sicheres Festsetzen des Stützbolzens über den Klemmkolben.

Weitere Merkmale der Erfindung beziehen sich auf konstruktive Einzelheiten der Erfindung. Die Erfindung wird nachfolgend anhand eines in der Zeichnung dargestellten Ausführungsbeispiels näher erläutert. Es zeigen:

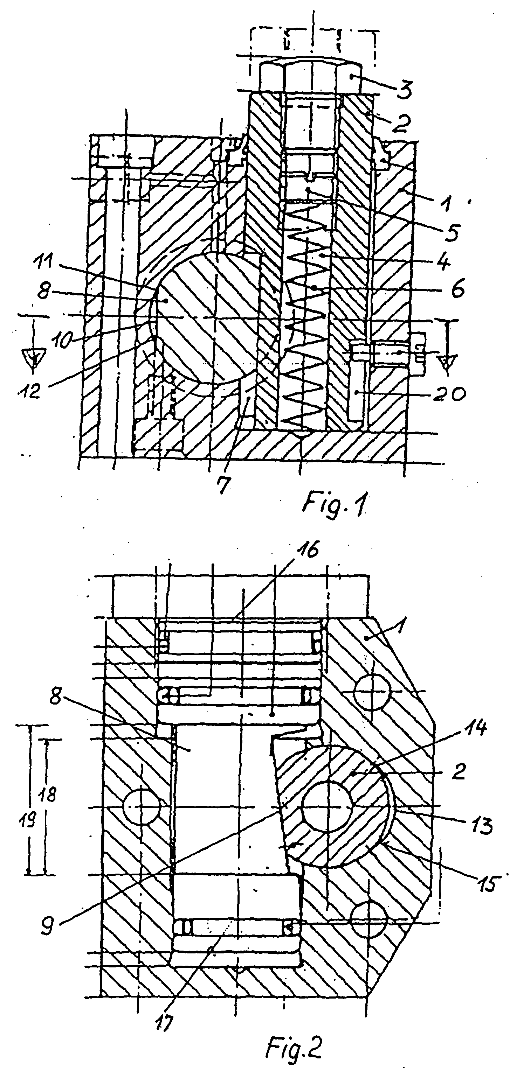

- Fig. 1: einen Längsschnitt durch ein Stützelement mit den Erfindungsmerkmalen,
- Fig. 2: einen Querschnitt durch das Stützelement gemäß Fig. 1,
- Fig. 3: einen Kolbenquerschnitt des Stützelementes gemäß Fig. 1,
- Fig. 4: ein Kräftediagramm für das Stützelement gemäß Fig. 1.

In einem Gehäuse 1 ist ein Stützbolzen 2 gelagert. Dieser Stützbolzen 2 ist mit einer Bohrung 4 versehen. Diese Bohrung 4 ist in ihrem oberen Teil mit einem Kopf 3 verschlossen. Dieser Kopf 3 dient zur Anlegung an das zu bearbeitende Werkstück. Unterhalb des Kopfes 3 ist in der Bohrung ein Gewinde eingebracht, in das ein Gewindestift 5 eindrehbar ist. Eine Druckfeder 6 in der Bohrung stützt sich einmal an dem Gewindestift 5 und zum anderen am Gehäuseboden ab. Durch die Druckfeder 6 wird der Stützbolzen 2 nach oben aus dem Gehäuse herausgefahren, uns zwar soweit, wie eine Begrenzung es zulässt. Diese Hubbegrenzung kann durch eine Nut 20 bestimmt werden. Die Vorspannung der Druckfeder 6 lässt sich durch den Gewindestift einstellen. Diese Einstellung wird so vorgenommen, dass die Federkraft das Gewicht des Stützbolzens und dessen Reibung überwindet.

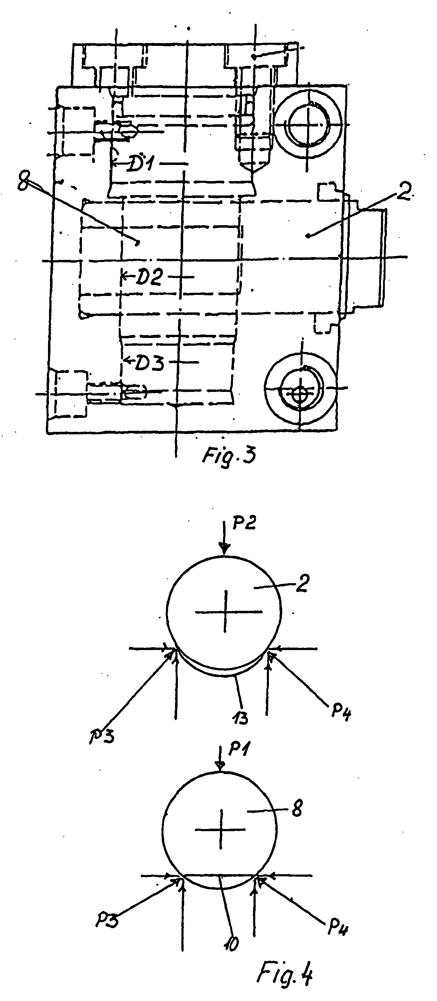

Der Stützbolzen 2 ist mit einer zu seiner Achse parallelen Aussparung 7 über den Bereich versehen, in dem er durch einen Klemmkolben 8 festgesetzt werden soll. In dem Gehäuse 1 ist senkrecht zur Bewegungsrichtung des Stützbolzen 2 ein Klemmkolben 8 geführt. Dieser Klemmkolben 8 ist mit einer Keilschräge 9 versehen, die der Aussparung 7 des Stützbolzen 2 angepasst ist. Der Klemmkolben 8 weist über seine Länge drei unterschiedliche Kolbendurchmesser auf. Dementsprechend ist auch der Zylinder, in dem der Klemmkolben geführt ist, stufenförmig ausgebildet. Die Kolbendurchmesser sind in ihren Abstufungen in Fig. 3 gezeigt. Der kleinste Kolbendurchmesser D3 mit seiner Kolbenfläche 17 ist zum Spannen des Kolbens bestimmt. Der Durchmesser D2 überdeckt den Bereich, in dem der Kolben den Stützbolzen klemmt und der Durchmesser D1 mit seiner Kolbenfläche 16 dient zum Entspannen und damit zum Lösen des Kolbens. Die Kraft zum Spannen des Klemmkolbens 8 muß so groß sein, dass der Klemmkolben 8 mit seiner Keilschräge 9 in die Aussparung 7 des Stützbolzen 2 gleitet und sich hier selbsthemmend festsetzt. Die Kraft zum Lösen des Klemmkolben 8 muß dementsprechend größer als die Spannkraft sein. Durch den grösseren Querschnitt D1 gegenüber D3 wird erreicht, dass die auf den Klemmkolben einwirkende Lösekraft bei gleichem Druck eine grössere Kraft erzeugt.

Das Festsetzen des Klemmkolben 8 in der Gehäusezylinderbohrung ist zur Übertragung und zur Einleitung der Kräfte abhängig von den Reibungskräften, die auf den Klemmkolben einwirken. Diese Reibungskräfte sind wiederum abhängig von der Flächenberührung zwischen Kolbenmantel und der Zylinderwand. Kolben die in einem Zylinder geführt sind weisen meist nur punktförmige Berührungen an den Flächen auf, was sich nachteilig auf die Reibungskräfte auswirkt. Die Erfindung sieht daher Maßnahmen vor, die wesentlich zur Erhöhung der Reibungskräfte beitragen. Der Klemmkolben 8 weist auf der Seite, die der Keilschräge 9 gegenüber liegt, eine Abflachung 10 über den Bereich 19 auf. Durch die Abflachung 10 entsteht ein erhöhter Anpressdruck des Klemmkolbens über den Bereich 18 an den Anpressflächen 11 und 12 der Innenwandung des Zylinders, so dass er unnachgiebig festgesetzt ist. Der Klemmkolben 8 weist somit im Bereich der Durchmesser D1 und D3 ein Spiel zum Gehäuse 1 auf. Die Flächenreibung erhöht sich erheblich. Der Keilschräge 9 wird vorzugsweise ein Winkel von 6-8* zugeordnet. Dieser Winkel hat sich als vorteilhaft erwiesen und unterstützt die Selbsthemmung in hohem Masse. Der Lösungsweg zum Entspannen des Klemmkolbens ist damit durch die Differenz der Wege der Bereiche 19 und 18 bestimmt.

Zur Unterstützung der Reibungskräfte kann auch im Zylinderbereich des Stützbolzen 2 das Gehäuse 1 mit einer mit einer Ausnehmung 13 versehen sein. Diese Ausnehmung 13 ist gegenüber der Aussparung 7 einzubringen, so dass sich der Mantel des Stützbolzen 2an den Anpreßflächen 14 und 15 der Zylinderwand anpresst und somit eine erhöhte Reibungskraft hervorruft.

Die Abflachung 10 im Klemmkolben 8 und die Ausnehmung 13 in der Gehäuseinnenwandung können wahlweise einzeln oder auch gemeinsam einem Stützelement zugeordnet sein. Das Kräfteverhältnis dieser beiden Maßnahmen zur Erhöhung der Reibungskräfte ist in einem Diagramm in Fig. 4 gezeigt. Die Kraft P1 ist die auf den Klemmkolben 8 einwirkende Kraft, wenn dieser in die Spannstellung fährt Die Anpresskräfte P3 und P4 werden größer als die Kraft P1 und erhöhen damit die Reibung. Das gleiche Prinzip ist gegeben, wenn auf den Stützbolzen 2 die Kraft P2, infolge Klemmung durch den Klemmkolben 8, einwirkt. Das bedeutet, dass der Klemmkolben 8 durch die Abflachung 10 während des Klemmvorganges durch einwirkende Kräfte nicht zurückweichen kann. Das gleiche gilt für den Stützbolzen 2, der in der Ausnehmung 13 gehalten ist.

Die Wirkungsweise ergibt sich wie folgt:
Gegen den ausgefahrenen Stützbolzen 2 wird das zu bearbeitenden Werkstück angelegt, bis es die vorgegebene Position erreicht hat. Durch den Druck auf den Kopf 3 des Stützbolzen 2 wird dieser gegen die Kraft der Druckfeder 6 in das Gehäuse 1 eingefahren. Ist die Position erreicht, wird der Stützbolzen in dieser Lage fest gesetzt, dazu wird der Klemmkolben 8 auf seiner Kolbenfläche 17 mit Druck beaufschlagt und solange in das Gehäuse eingefahren, bis er mit seiner Keilschräge 9 in der Aussparung 7 fest sitzt. Nunmehr kann der Druck von der Kolbenfläche 17 weg genommen werden. Der Klemmkolben 8 ist in die Position der Selbsthemmung gegangen und verhindert, dass der Stützbolzen 2 seine Lage ändert.

Ist der Bearbeitungsvorgang beendet, wird die Kolbenfläche 16 mit Druck beaufschlagt. Infolge des grösseren Kolbenquerschnittes ist die auf den Klemmkolben nunmehr einwirkenden Kraft größer als die Spannkraft, womit der Klemmkolben in seine Ausgangsposition zurück geführt wird.

Bisher wurde davon ausgegangen, dass der Stützbolzen 2 durch eine innen liegende Druckfeder 6 in seine Arbeitsposition gebracht wird. Diese Feder kann durch ein hydraulisches oder pneumatisches System ersetzt werden. In diesem Fall muß nicht das Werkstück gegen den Stützbolzen gefahren werden, sondern der Stützbolzen gegen das Werkstück. Ebenso kann der Klemmkolben hydraulisch, pneumatisch oder auch mechanisch mittels Gewindespindeln betätigt werden.

Die Spannkraft und die Haltekraft sind abhängig von der Wirkungsweise des Klemmkolbens und damit von der Kraft, die auf den Klemmkolben einwirkt. Diese Haltekraft kann durch Sensoren überwacht werden, die dem Stützelement an geeigneter Stelle zugeordnet sind. Diese Sensoren zeigen den jeweiligen Zustand des Klemmkolbens und oder des Stutzbolzens an.

## Patentansprüche

1. Stützelement zur Unterstützung des Spannvorganges von Werkstücken auf Bearbeitungsmaschinen mit einem herausfahrbaren Stützbolzen (2) und Festsetzung desselben mittels eines verschiebbaren Klemmkolbens (8), der mit einer Keilfläche (9) versehen ist, wobei der Klemmkolben (8) drei unterschiedliche Durchmesser (D1; D2; D3) aufweist, die im Verhältnis D1 > D2 >D3 abgestuft sind, und daß der größte Durchmesser (D1) mit seiner Kolbenfläche (16) der Seite zugeordnet ist, die zum Entspannen mit Druck beaufschlagt wird, und daß der Durchmesser (D3) zum Spannen des Klemmkolbens eine kleinere Kolbenfläche (17) aufweist, so daß bei gleichem Druck eine größere Kraft zum Lösen des Klemmkolbens (8) auf diesen einwirkt, und daß der Klemmkolben (8) in einem abgestuften Zylinder des Gehäuses (1) geführt ist, **dadurch gekennzeichnet, daß** der Klemmkolben (8) auf seiner der Keilschräge (9) gegenüberliegenden Seite mit einer Abflachung (10) versehen ist, derart, daß bei auftretenden Querkräften eine doppelte Flächenabstützung über den Bereich (18) der Zylinderwand erfolgt.

2. Stützelement nach Anspruch 1, **dadurch gekennzeichnet, daß** der Klemmkolben (8) im Bereich des Durchmessers (D2) mit einer Keilschräge (9) versehen ist, deren Winkel etwa 6-8° beträgt.

3. Stützelement nach Anspruch 1 oder 2, **dadurch gekennzeichnet, daß** senkrecht zum Klemmkolben (8) ein Stützbolzen (2) in dem Gehäuse (1) geführt ist, der im Bereich der Keilschräge (9) des Klemmkolbens (8) eine zu seiner Achse parallel verlaufende Aussparung (7) aufweist, in der der Klemmkolben (8) mit seiner Keilschräge (9) einführbar ist.

4. Stützelement nach einem der Ansprüche 1 bis 3, **dadurch gekennzeichnet, daß** in dem zylindrischen Teil des Gehäuses (1), in dem der Stützbolzen (2) gleitend geführt ist, eine Ausnehmung (13) eingelassen ist, in die der Stützbolzen (2) infolge der beim Spannen auf ihn einwirkenden Querkräfte gedrückt wird, so daß durch die doppelte Flächenabstützung (14; 15) eine erhöhte Flächenpressung zwischen Stützbolzen (2) und Wand des Zylinders entsteht.

5. Stützelement nach einem der Ansprüche 1 bis 4, **dadurch gekennzeichnet, daß** in dem Stützbolzen (2) eine Bohrung (4) eingebracht ist, in die ein Gewindestift (5) eingedreht ist, der auf eine in der Bohrung geführte Druckfeder (6) einwirkt.

6. Stützelement nach einem der Ansprüche 1 bis 5, **dadurch gekennzeichnet, daß** der Kolbenweg des Klemmkolbens (8) zum Lösen aus der Spannposition durch die Differenz der Wege über die Bereiche (18; 19) bestimmt ist.

7. Stützelement nach einem der Ansprüche 1 bis 6, **dadurch gekennzeichnet, daß** der Stützbolzen (2) mit einer Hubbegrenzung versehen ist.

8. Stützelement nach einem der Ansprüche 1 bis 7, **dadurch gekennzeichnet, daß** der Klemmkolben (8) im Spannzustand nur im Bereich (18) an den Anpressflächen (11;12) anliegt und im Bereich der Durchmesser D1 und D3 ein Spiel zum Gehäuse (1) aufweist.

9. Stützelement nach einem der Ansprüche 1 bis 8, **dadurch gekennzeichnet, daß** die Klemmkraft des Klemmkolbens (8) und des Stützbolzens (2) von Sensoren überwacht ist.

## Claims

1. Supporting element for assisting the operation of clamping work pieces on processing machines, comprising an extensible supporting pin (2) and providing for the locking of said pin by means of a displaceable clamping piston (8) provided with a wedge surface (9), wherein said clamping piston (8) presents three different diameters (D1; D2; D3) graduated in the ratio D1 > D2 > D3, and wherein the widest diameter (D1) with its piston surface (16) is associated with that side that is subjected to pressure for unclamping whilst the diameter (D3) presents a smaller piston surface (17) for clamping said clamping piston such that at the same pressure level a higher force acts upon said clamping piston (8) for releasing the latter, and wherein said clamping piston (8) is guided in a graduated cylinder of the housing (1), **characterised in that** said clamping piston (8) is provided with a flattened section (10) on its side opposite to said wedge slope (9) such that when transverse forces occur a dual supporting effect over an area is achieved via the region (18) of the cylinder wall.

2. Supporting element according to Claim 1, **characterised in that** said clamping piston (8) is provided with a wedge slope (9) in the area of said diameter (D2), whose angle amounts to 6 to 8° approximately.

3. Supporting element according to Claim 1 or 2, **characterised in that** a supporting pin (2) is guided in said housing (1) in a direction orthogonal on said clamping piston (8), which pin presents a recess (8) extending in parallel with the axis of said pin in the zone of said wedge slope (9) of said clamping piston (8), into which recess said clamping piston (8) can be inserted by its wedge slope (9).

4. Supporting element according to any of the Claims 1 to 3, **characterised in that** a recess (13) is formed in the cylindrical part of said housing (1), in which said supporting pin (2) is guided for sliding movement, into which recess said supporting pin (2) is urged as a result of the transverse forces acting upon it in clamping operation so that an increased area pressure is created between said supporting pin (2) and the wall of said cylinder due to the effect of dual support over an area (14; 15).

5. Supporting element according to any of the Claims 1 to 4, **characterised in that** a bore (4) is formed in said supporting pin (2), into which a threaded pin (5) is screwed that acts upon a compression spring (6) guided in said bore.

6. Supporting element according to any of the Claims 1 to 5, **characterised in that** the piston stroke of said clamping piston (8) for release from the clamping position is determined by the difference of the strokes over said regions (18, 19).

7. Supporting element according to any of the Claims 1 to 6, **characterised in that** said supporting pin (2) is provided with stroke limiting means.

8. Supporting element according to any of the Claims 1 to 7, **characterised in that** in the clamping state, said clamping piston (8) bears against the bearing surfaces (11; 12) only in said region (18) and presents a clearance relative to said housing (1) in the region of said diameters D1 and D3.

9. Supporting element according to any of the Claims 1 to 8, **characterised in that** the clamping force of said clamping piston (8) and said supporting pin (2) is monitored by sensors.

## Revendications

1. Élément d'appui pour soutien dans l'opération de serrer des pièces d'oeuvre sur des machines d'usinage, comprenant un axe de support (2) amovible et assurant le serrage dudit axe moyennant un piston de serrage (8) déplaçable et muni d'une aire de clavette (9), dans lequel ledit piston de serrage (8) présente trois diamètres différents (D1; D2; D3) à gradins en un rapport de D1 > D2 > D3, et dans lequel le diamètre le plus large (D1) avec sa face de piston (16) est affecté à ce côté, qui est assujetti à une pression de desserrage, pendant que le diamètre (D3) présente une plus petite face de piston (17) pour serrer ledit piston de serrage d'une telle manière, qu'à un même niveau de pression un effort plus fort agisse sur ledit piston de serrage (8) pour le desserrer, et dans lequel ledit piston de serrage (8) est guidé dans un cylindre à gradins du carter (1), **caractérisé en ce que** ledit piston de serrage (8) est muni d'une partie aplatie (10) de son côté opposé audit chanfrein de clavette (9) d'une telle manière, qu'à l'occurrence des forces transversales, un effet double d'appui en nappe est achevé via la zone (18) de la paroi du cylindre.

2. Élément d'appui selon la revendication 1, **caractérisé en ce que** ledit piston de serrage (8) est muni d'un chanfrein de clavette (9) dans la zone dudit diamètre (D2), dont l'angle correspond à 6 à 8° environ.

3. Élément d'appui selon la revendication 1 or 2, **caractérisé en ce qu'**un axe de support (2) est guidé dans ledit carter (1) en un sens orthogonal sur ledit piston de serrage (8), cet axe présentant un évidement (8) s'étendant en parallèle à l'axe dudit axe dans la zone dudit chanfrein de clavette (9) dudit piston de serrage (8), à permettre l'insertion dudit piston de serrage (8) dans ledit évidement par son chanfrein de clavette (9).

4. Élément d'appui selon une quelconque des revendications 1 à 3, **caractérisé en ce qu'**un évidement (13) est formé dans la partie cylindrique dudit carter (1), dans lequel ledit axe de support (2) est guidé en mouvement glissant, audit axe de support (2) étant pressé dans ledit évidement en conséquence des efforts transversaux, qui agissent sur lui en opération de serrage, d'une telle manière, qu'une pression augmentée en nappe soit engendrée entre ledit axe de support (2) et la paroi dudit cylindre en vertu de l'effet de l'appui double en nappe (14; 15).

5. Élément d'appui selon une quelconque des revendications 1 à 4, **caractérisé en ce qu'**un alésage (4) est formé dans ledit axe de support (2), dans lequel une tige filetée (5) est vissée, qui agit sur un ressort de compression (6) guidé dans ledit alésage.

6. Élément d'appui selon une quelconque des revendications 1 à 5, **caractérisé en ce que** la course du piston dudit piston de serrage (8) pour le desserrage de la position de serrage est déterminée par la différence des courses sur lesdites zones (18, 19).

7. Élément d'appui selon une quelconque des revendications 1 à 6, **caractérisé en ce que** ledit axe de support (2) est muni des moyens limiteurs de course.

8. Élément d'appui selon une quelconque des revendications 1 à 7, **caractérisé en ce qu'**en état de serrage, ledit piston de serrage (8) ne porte contre les surfaces de pression (11 ; 12) que dans ladite zone (18), en présentant un jeu relativement audit carter (1) dans la zone desdits diamètres D1 et D3.

9. Élément d'appui selon une quelconque des revendications 1 à 8, **caractérisé en ce que** l'effort de serrage dudit piston de serrage (8) et dudit axe de support (2) est surveillé moyennant des capteurs.
